# EUROPÄISCHE PATENTSCHRIFT

(11) **EP 0 772 804 B1**
(45) Veröffentlichungstag und Bekanntmachung des Hinweises auf die Patenterteilung: **16.04.2003**
(21) Anmeldenummer: 95924901.2
(22) Anmeldetag: 22.06.1995
(51) Int. Cl.: A47J 37/04

(54) **ANORDNUNG VON EINER MEHRZAHL VON GERÄTEN ZUR ZUBEREITUNG VON SPEISEN**
ARRANGEMENT OF A PLURALITY OF FOOD-PREPARATION DEVICES
AGENCEMENT D'UNE PLURALITE D'APPAREILS POUR LA PREPARATION D'ALIMENTS

(30) Priorität: 21.07.1994 DE 9411508 U; 24.08.1994 DE 9413628 U; 24.08.1994 DE 9413627 U
(43) Veröffentlichungstag der Anmeldung: 14.05.1997
(73) Patentinhaber: Riesselmann, Gottfried, D-49377 Vechta (DE)
(72) Erfinder: Riesselmann, Gottfried, D-49377 Vechta (DE)
(74) Vertreter: Müller, Enno, Dipl.-Ing.
(86) Internationale Anmeldenummer: EP9502419
(87) Internationale Veröffentlichungsnummer: WO96003681

(56) Entgegenhaltungen:
- CH-A- 334 973
- CH-A- 366 138
- CH-A- 373 539
- DE-U- 9 208 001
- FR-A- 2 172 257
- GB-A- 2 179 763
- US-A- 2 245 220
- US-A- 2 636 431
- US-A- 3 125 015
- US-A- 4 455 924
- US-E- R E23 874
- PATENT ABSTRACTS OF JAPAN vol. 015, no. 361 (C-0867), 12. September 1991 & JP 03 146019 A (KOICHI SANADA), 21. Juni 1991

## Beschreibung

Die Erfindung betrifft ein Grillgerät nach den Merkmalen des Oberbegriffes des Anspruchs 1.

Zum Stand der Technik ist auf die US-PS 2,245,220, die US-PS 2,636,431, die CH-PS 366 138 zu verweisen.

Die Erfindung beschäftigt sich mit der technischen Aufgabe, die Heizleistung eines solchen Grillgerätes günstig zu beeinflussen.

Diese Aufgabe ist beim Gegenstand des Anspruches 1 gelöst. Es handelt sich um eine Grillgerät mit einer um eine waagerechte Grillachse drehbaren Grillhalterung für die Aufnahme eines Grillgutes, insbesondere von Geflügel, und mit einer über der Grillachse liegenden Heizfläche. Die Heizfläche ist koaxial zur Grillachse angeordnet. Das auf der drehbaren Grillhalterung aufgenommene Grillgut weist damit im Heizbereich jeweils einen gleichen Abstand zur Heizfläche auf und wird dort gleichmäßig und intensiv erwärmt. Dabei setzt sich die Heizfläche aus einzelnen, induktiv aufheizbaren Heizelementen zusammen, die individuell in ihrer Heizleistung steuerbar sind, wozu die Heizelemente z.B. mit Thermofühlern versehen sind. Somit kann eine unterschiedliche Hitzebeaufschlagung je nach Grillgut oder auch gewünschter Zubereitungszeit erfolgen und ist die Gefahr eines Verbrennens des Grillgutes durch eine zu hohe Heizleistung sicher vermieden. Bevorzugt ist weiter vorgesehen, dass die Heizelemente als Stab-Heizelemente ausgebildet sind, dass sich die Stab-Heizelemente parallel zur Grillachse erstrecken und dass die Stab-Heizelemente auf einer Mantelfläche um die Grillachse angeordnet sind, wobei bevorzugt jedes Stab-Heizelement an einem ersten Ende gehalten ist und ein zweites freies Ende des Stab-Heizelementes auf die Grillachse zu abgewinkelt ist. Durch die Verwendung von Stab-Heizelementen wird ohne Aufwand eine zur Grillachse koaxiale Heizfläche geschaffen, welche frei ist von aufwendigen, räumlichen Biegungen, die z.B. bei einer Heizschlange nötig wären. Die abgewinkelten freien Enden der Stab-Heizelemente ermöglichen eine ausreichende und vorteilhafte Durchgarung z.B. des Brustfilets von Geflügel, welches dementsprechend auf der Grillhalterung aufgenommen ist.

Es hat sich gezeigt, dass bereits fünf Heizstäbe, bevorzugt verteilt auf einen Kreisbogen mit einem Öffnungswinkel von 180° oberhalb der Grillachse, eine gleichmäßige Heizfläche ausbilden.

Alternativ ist vorgesehen, dass jedes Heizelement U-förmig ausgebildet ist mit zwei von einem Querstück abragenden Schenkeln, dass jedes Heizelement an seinen zwei Schenkelenden gehalten ist und dass der freie Endbereich mit dem Querstück auf die Grillachse zu abgewinkelt ist. Bevorzugt bilden drei U-förmige Heizelemente, verteilt auf einem Kreisbogen mit einem Öffnungswinkel von 180° oberhalb der Grillachse eine gleichmäßige Heizfläche aus. Auch hier wird durch den abgewinkelten freien Endbereich insbesondere durch das relativ nahe zur Grillachse liegende Querstück des U-förmigen Heizelementes, eine große Heizleistung für eine Durchgarung z.B. des Brustfilets von entsprechend auf der Grillhalterung gehaltenen Geflügels zur Verfügung gestellt.
Auch hier ist jedes U-förmige Heizelement wieder individuell in seiner Heizleistung steuerbar und können die Heizelemente selbst oder deren unmittelbare Umgebung mit entsprechenden Thermofühlern versehen sein.

Über den Heizelementen ist der Reflektor angeordnet, der konisch ausgebildet ist und mit seinem kleinsten Durchmesser zu den vorderen Enden der Stab-Heizelemente bzw. den freien Endbereichen der U-förmigen Heizelemente hin orientiert ist. Ferner ist der Reflektor dort abgewinkelt, wodurch die Heizelemente sehr geschützt hinter einer Schutzblende liegen.

Das Grillgerät nach der Erfindung weist eine Rückwand auf, in der etwa mittig ein Adapter zu einem einseitigen Anschluss der Grillhalterung auf der Grillachse angeordnet ist. Die Drehbarkeit der Grillhalterung wird z.B. durch einen Motor hinter der Rückwand über den Adapter sicher gestellt. Diese Maßnahme erlaubt, fertiges Grillgut rasch gegen noch zu grillendes auszutauschen. Ferner ist nach der Erfindung vorgesehen, dass in der Rückwand auch die ersten Enden der Stab-Heizelemente bzw. die Schenkelenden einzeln gehalten sind, wodurch diese leicht zu wechseln sind. Ferner ist bevorzugt an der Rückwand auch der Reflektor gehalten.

Es kann vorgesehen sein, dass die Rückwand Teil eines allseitig geschlossenen Gehäuses zur Aufnahme eines Grillplatzes ist, welcher durch die Fronttür zugänglich ist. Damit ist das Grillgerät nach der Erfindung entsprechend bisherigen Haushalts-Grillgeräten gestaltet und kann diese bspw. ersetzen. Insbesondere dann ist ferner vorgesehen, dass dieser Grillplatz evakuierbar auf einen Niederdruck gegenüber dem Umgebungsdruck ist, um so ohne Geschmacksverschlechterung ein schonendes, aber dennoch zügiges Grillen für eine gesunde Ernährung zu ermöglichen.

Für eine Aufrechterhaltung einer Luftzirkulation ist noch vorgesehen, dass das Gehäuse und/oder der Reflektor eine Durchgangsöffnung aufweisen.

Alternativ zu dieser Ausbildung kann nach der Erfindung vorgesehen sein, dass eine vertikale Tragwand mehrere Grillplätze aufweist, wobei bevorzugt an der Tragwand übereinanderliegende Reihen von Grillplätzen angeordnet sind, wobei die Grillachsen der einzelnen Grillplätze einer Reihe auch versetzt zu den Grillachsen der benachbarten Reihe angeordnet sein können. Eine derartige Anordnung ist bspw. für Imbissunternehmen oder in der Gastronomie von Vorteil, da dann ein rascher Durchsatz von Grillgut möglich ist. Dauert die Grillzeit für z.B. tiefgefrostetes Geflügel bspw. 30 Minuten, kann bei acht Grillplätzen alle 3 bis 4 Minuten ein Geflügel gegart sein.

Insbesondere für derartige Anordnungen von Grillplätzen kann nach der Erfindung ferner vorgesehen sein, dass jeweils Anzeigen des Garzustandes des Grillgutes jedes einzelnen Grillplatzes erfolgen durch z.B. die Anzeige der bisherigen Grillzeit, der Grillzeit bis zur vollständigen Garung usw. In Weiterbildung der Erfindung kann auch vorgesehen sein, dass mit den Grillplätzen jeweils eine Waage verbunden ist, dass bzgl. jedes Grillplatzes vorgegeben werden kann, um welche Art von Grillgut, z.B. Geflügel es sich handelt und dass daraus ein Rechner für den betreffenden Grillplatz selbständig die Garzeit berechnet und den Garprozess steuert. Gegebenenfalls kann der Rechner auch den Garprozess verlängern, wenn plötzlich weniger Kunden als vorgesehen nach dem Grillgut verlangen. Besonders leicht ist dieses bei tiefgefrorenem Grillgut der Fall. Ist andererseits jeder Grillplatz besetzt, kann über den Rechner festgestellt werden, welcher Grillplatz als nächster frei werden wird. Eine derartige Anzeige kann z.B. dadurch ausgelöst werden, dass ein weiteres Grill gut auf der Waage abgewogen wird.

Unterhalb der Grillachse kann eine Fettpfanne vorgesehen sein, deren Seitenwände bis etwa auf die Höhe des Reflektors reichen. Diese Maßnahme verhindert Fettspritzer z.B. an den Seitenwänden eines Gehäuses. Ebenso fängt die Fettpfanne vom Grillgut abtropfendes Fett auf, das durch diese Maßnahme leicht entsorgt werden kann, indem es z.B. auch einem Kunden angeboten werden kann. Ferner kann die Fettpfanne nach Art eines Reflektors die Hitze der Heizfläche zurückstrahlen, wodurch insbesondere auch der Auftauprozess eines tiefgefrorenen Grillgutes beschleunigt werden kann, da zu diesem Zeitpunkt die Fettpfanne noch nicht durch Fettspritzer bzw. durch abtropfendes Fett verunreinigt ist.

Ferner kann unterhalb der Grillachse ein Rost für konventionelles Grillen noch vorgesehen sein. Die Grillhalterung für die Aufnahme des Grillgutes kann in einfacher Spießform ausgebildet sein, wobei ein Ende der Grillhalterung zum Anschluß an den Adapter ausgebildet ist und das gegenüberliegende freie Ende in einer Spitze ausläuft. Bevorzugt sind jedoch Grillhalterungen, deren Form weitestgehend der aus der europäischen Patentanmeldung 88 100 835.3 bekannten entspricht, da diese insbesondere für tiefgefrostetes Geflügel geeignet sind. Bevorzugt ist dabei ein Grillhalter, der im wesentlichen koaxial zur Grillachse verlaufende Einzelstreben aufweist, die am freien Ende in einer Spitze auslaufen und adapterseitig einen Innenraum ausbilden, der auch bei Gebrauch der Halterung grillgutfrei gehalten ist. Durch diese Maßnahme ist die Grillguthalterung nicht nur optimal für die Aufnahme von Geflügel ausgebildet, da ihre Form an die Bauch- bzw. Brusthöhlung des Geflügels anpaßbar ist, sondern erlaubt auch, dass auf der Grillachse ein mittiger Heizstab, wie die übrigen individuell gesteuert mit z.B. einem Thermofühler als Ist-Wertgeber, angeordnet sein kann, um eine Innenhitze aufzubringen und damit einen Auftauvorgang z. B. bei gefrostetem Geflügel enorm zu beschleunigen. Ein solcher Heizstab kann sich mitdrehend oder auch stillstehend ausgebildet sein.

In Ausgestaltung der Erfindung ist weiter vorgesehen, dass die Grillhalterung eine grillhalterfeste Schulter zur Anlage innerhalb des Grillgutes aufweist. Es ist das Grillgut von dem Grillguthalter derart gehalten, dass die Einzelstreben das Grillgut vollständig durchsetzen, wodurch endseitig des Grillgutes freie Bereiche entstehen und eine der den Grillprozeß fördernde Luftzirkulation durch das Grillgut hindurch ermöglicht ist. Als weitere Maßnahme ist vorgesehen, dass das dem Adapter abgewandte freie Ende der Grillhalterung mit einer Gegenhalterung zum Festspannen des Grillgutes gegen die Schulter versehen ist, wodurch das Grillgut sowohl in axialer wie in radialer Richtung sicher gehalten ist.

Eine weitere Maßnahme sieht vor, dass dem Grillplatz eine Düse zugeordnet ist, dass die Düse an einem oder mehreren Gewürzbehältern angeschlossen ist und dass mittels der Düse das Grillgut mit Gewürzen besprühbar und/oder die Atmosphäre des des Grillraumes mit Gewürzen anreicherbar ist. Es kann eine solche Anreicherung auch dadurch erfolgen, dass die Gewürze z.B. auch mit Wasser in der Fettpfanne in den Grillraum einbringbar sind.

Letztlich ist vorgesehen, dass das freie Ende der Grillhalterung einen Anschluß für einen Handgriff aufweist, mittels dem die Grillhalterung in den Adapter eingesetzt bzw. aus diesem herausgenommen werden kann. Insbesondere bei einer heißen Grillhalterung sind damit Verbrennungen ausgeschlossen und eine leichte Handhabbarkeit durch Verzicht auf z. B. isolierende Handschuhe, sichergestellt.

Um auch kleine Grillgutstücke mit einem geeigneten Grillguthalter grillen zu können, mit dem auch eine große Grillkapazität erreichbar sein soll, wird auch vorgeschlagen, daß die Grillhalterung eine senkrecht zur Grillachse stehende, bevorzugt kreisförmig ausgebildete, sich mitdrehende Grundplatte aufweist, dass mittig an der Grundplatte der Adapter angeordnet ist und dass die Grundplatte mehrere Fassungen für auswechselbare Aufnahmen für das Grillachse horizontal und sind die Fassungen ringförmig um die Grillachse in regelmäßigen Winkelabständen angeordnet. In vorteilhafter Weise können damit mehrere, unterschiedlichste Grillgutstücke gleichzeitig in nur einem Grill gegart werden, wobei durch die auswechselbaren Aufnahmen für das Grillgut dafür gesorgt ist, dass für unterschiedlichstes Grillgut eine angepasste Aufnahme verwendet werden kann. Es ist vorgesehen, dass jede Fassung in der Grundplatte um eine eigene Rotationsachse parallel zur Grillachse drehgelagert ist und dass jede Fassung ein Kraftübertragungselement aufweist, über das mittels eines Antriebes jede Aufnahme in Eigenrotation um ihre eigene Rotationsachse versetzt werden kann. Durch das eigenständige Rotieren jeder Aufnahme für einzelne Grillgutstücke wird sichergestellt, dass diese Grillgutstücke über ihren Umfang gleichmäßig von der Heizfläche bestrahlt werden, wodurch ein gleichmäßiger Grillprozess gewährleistet ist. In einer ersten Variante kann für den Antrieb dieser Eigenrotation vorgesehen sein, dass jedes Kraftübertragungselement ein Zahnrad aufweist, das mit einem Zahnrad auf dem Achsstumpf in Wirkverbindung steht. Dabei kann das Zahnrad des Kraftübertragungselementes unmittelbar mit dem Zahnrad auf dem Achsstumpf kämmen oder aber sind weitere Zwischenzahnräder vorgesehen. Alternativ dazu kann vorgesehen sein, dass jedes Kraftübertragungselement ein gezahntes Rad aufweist, das mit einem mit der Grillhalterung nicht mitrotierenden Zahn und/oder Kranz von Zähnen kontaktiert zur Erzeugung der Eigenrotation der jeweiligen Aufnahme. Insbesondere kann das gezahnte Rad nach Art eines Flügelrades z.B. vier Zähne aufweisen, welche nacheinander an den nicht mitrotierenden Zähnen anschlagen und jeweils die Aufnahme um ihre Rotationsachse um einen bestimmten Winkelbereich, z.B. 90 oder 138° verdrehen. Dazu kann eine Rastvorrichtung innerhalb des Kraftübertragungselementes vorgesehen sein, wodurch ein genauer Drehbereich für die Eigenrotation durch Anschlagen z.B. eines der Flügel an einen Zahn festgelegt und bei der Rotation der Grillhalterung die Aufnahme selbst festgelegt ist. Ein weiteres Antriebskonzept sieht vor, dass jedes Kraftübertragungselement ein Zahnrad aufweist, das nach Art eines Planetengetriebes mit einem nach innen gezahnten Zahnkranz in Wirkverbindung steht, wobei der Zahnkranz ringförmig die Zahnräder umschließt. Ein weiteres bevorzugtes Antriebskonzept sieht vor, dass jedes Kraftübertragungselement ein Zahnrad aufweist, dass mit einem nach außen gezahnten Zahnkranz in Wirkverbindung steht, wobei der Zahnkranz von den Zahnrädern ringförmig eingeschlossen ist. Auch bei den alternativen Ausführungen des Antriebes können zwischen den Zahnkränzen und den Zahnrädern weitere Kraftübertragungsglieder angeordnet sein. Ein weiteres Antriebskonzept sieht vor, daß jedes Kraftübertragungselement ein Antriebsrad z.B. nach Art einer Schnurrolle oder eines Kettenrades aufweist, das ein Antriebsband z.B. nach Art einer Antriebs-Schnur oder einer Antriebskette über eine Antriebswelle umläuft und dass das Antriebsband mittels eines grillhalterungsunabhängigen weiteren Antriebsrades angetrieben ist. Als Antriebs-Schnur kann z.B. ein Federdraht-Seil verwendet sein.
Bei derartigen Antrieben sind die feststehenden, grillhalterungsunabhängigen Antriebsräder, Zähne, Kranz von Zähnen oder Zahnkränze bevorzugt an einer Wand, z.B. einer Rückwand eines backofenähnlichen Grills angeordnet. Es ist ferner vorgesehen, dass der Adapter, die gezahnten Räder, Antriebsräder und Zahnräder der Kraftübertragungselemente und/oder weitere Kraftübertragungsglieder auf der den Aufnahmen gegenüberliegenden Unterseite der Grundplatte angeordnet sind. Damit ist ein sicherer Antrieb geschaffen, der sehr robust ist und der durch die Grundplatte selbst gegenüber z.B. Fettspritzer geschützt ist. Dabei kann in Ausgestaltung der Erfindung weiter vorgesehen sein, dass der Adapter, die gezahnten Räder, die Antriebsräder mit dem umlaufenden Antriebsband und die Zahnräder der Kraftübertragungen und/oder weitere Kraftübertragungsglieder durch eine Deckplatte abgekapselt sind. Je nach Gestaltung sind entsprechende Ausnehmungen dann für den Antrieb vorzusehen. Zum einen wird dadurch einer Verschmutzung vorgebeugt und ist andererseits die Verletzungsgefahr durch offenliegende gezahnte Räder, Antriebsräder und deren Antriebsband, Zahnräder und/oder Kraftübertragungsglieder im ausgebauten Zustand der Grillhalterung nahezu ausgeschlossen. Nach einem weiteren Merkmal der Erfindung kann die Grundplatte schüsselförmig und mit Füßen auf der Unterseite ausgebildet sein, auf die die Grillhalterung im ausgebauten Zustand abstellbar ist. Dies erleichtert die Handhabung erheblich, da die Schüsselform der Grundplatte vom Grillgut abtropfendes Fett usw. auffängt und es so zu keiner Verschmutzung des Arbeitsplatzes kommt. Nach der Erfindung weist die Grillhalterung weiter eine sich konzentrisch zur Grillachse erstreckende Mittelstütze auf, die spießähnlich zur Aufnahme größeren Grillgutes, z.B. eines Fasans, einer Flugente oder einer Babypute, aber auch eines Bratens, ausgebildet ist. Die Mittelstütze weist in Ausgestaltung auf der Grillachse einen freien Raum zur Aufnahme eines Heizstabes auf, der am Achsstumpf angeordnet ist. Dieser Heizstab erzeugt zum einen eine Innenhitze bei den angesprochenen größeren Grillgutstükken oder aber schafft eine zweite, auf der Grillachse liegende Heizfläche für die dazu konzentrisch angeordneten unterschiedlichen Aufnahmen für einzelne Grillgutstücke. Um eine besonders gute Wirksamkeit eines solchen Heizstabes sicherzustellen, kann vorgesehen sein, dass die Mittelstütze ringförmig um die Grillachse angeordnete, sich entlang der Grillachse erstreckende Einzelstreben aufweist, die an einem freien Ende in einer spießähnlichen Spitze münden können und die adapterseitig den freien Raum ausbilden, der auch bei Gebrauch grillgutfrei zur Aufnahme z.B. des Heizstabes gehalten ist. Auf den Einzelstäben der Mittelstütze ist das Grillgut von den Einzelstreben durchsetzend gehalten, so dass beidseits des Grillguts freie Bereiche gebildet sind, so dass eine Luftzirkulation zur Unterstützung des Grillprozesses durch das Grillgut hindurch möglich ist. Dazu tragen zwischen den Einzelstreben, zur Grillachse gleichermaßen wie diese beabstandet und an der Grundplatte festgelegt, frei endende Einzelstäbe bei, deren freien Enden zur Grillachse hin abgewinkelt sind. Diese Einzelstäbe halten den freien Raum von z.B. Fettlappen des Grillgutes frei. Es weist die konzentrische Mittelstütze ferner ein Gleitstück auf, auf dem eine oder mehrere Gegenhalterungen für das Grillgut und/oder eine oder mehrere Aufnahmen verschieblich geführt sind. Letztlich kann die Mittelstütze an ihrer freien Spitze einen Anschluss für einen Handgriff aufweisen, mittels dem die Grillhalterung über den Adapter an den Achsstumpf angeschlossen bzw. von diesem abgenommen werden kann. Bevorzugt ist dabei dieser Anschluss bajonettartig ausgebildet, so daß eine sicherer Handhabung gewährleistet ist. Als Aufnahmen für die einzelnen Grillgutstücke kommen eine Vielzahl von unterschiedlichen Formen in Frage. Eine Ausgestaltung sieht - kerzenständerähnlich - einen Teller mit mittigem Dorn vor, auf den das Grillgut einfach aufgesteckt wird. Dazu ist der Dorn derart ausgebildet, dass sich ein Grillgut auf ihm nicht drehen kann. Alternativ dazu können mehrere Dorne vorgesehen sein. Insbesondere für aufgesteckte Keulen von z.B. Geflügel kann auf dem Gleitstück der Mittelstütze eine gabelförmige Gegenhalterung vorgesehen sein, von der mittels zweier federnder Zinken das Grillstück gehalten ist. Es ist diese Gegenhalterung mittels eines Gleitteils auf dem Gleitstück verschiebbar geführt und dort feststellbar. Eine andere Aufnahme dient dem Grillen z.B. eines Schaschlikspießes, dessen eine Spitze von einem in eine Fassung eingesetzten Anschlag für das Grillgut z.B. klemmend gehalten ist. Das zweite Ende des Spießes ist weiter bevorzugt in einer Gegenhalterung, die auf dem Gleitstück der Mittelstütze angeordnet ist, drehbar gehalten. Die Gegenhalterung weist einen mittels eines Gleitteils auf dem Gleitstück verschiebbar geführten und feststellbaren Arm auf, der wenigstens eine Bohrung und/oder Lager für eine Drehlagerung korrespondierender Ansätze von Aufnahmen aufweist. Die Aufnahme kann auch zur Rotationsachse ringförmig angeordnete sich im wesentlichen parallel zur Rotationsachse erstreckende federnde Zungen aufweisen, von denen das Grillgut gehalten ist. Eine Ausgestaltung dieser Aufnahme kann weiter vorsehen, dass der radiale Abstand zwischen den Zungen und der Rotationsachse verstellbar ist. Eine weiter bevorzugte Ausgestaltung einer Aufnahme sieht diese korbähnlich mit Gitterwänden ausgebildet vor. Eine solche Aufnahme eignet sich bestens für ein Grillgut wie Obst oder Gemüse. Insbesondere können solche Gitterwände raumformmäßig dem Grillgut angepasst ausgeführt sein. Weiter bevorzugt umschließen dabei die Gitterwände einen Grillgutraum und ist dieser Grillgutraum durch Öffnung eines Gitterwandteils zugänglich. Es ist vorgesehen, dass der Grillgutraum rotationssymmetrisch zur Rotationsachse ausgebildet ist und dass die Gitterwände zweiteilig, jeweils etwa die Hälfte des Grillgutraumes umschließend und um ein Scharnier aufschwenkbar sind. Dabei sind die Gitterwandteile durch die Kraft einer Feder oder einen Riegel verschlossen gehalten. Zur leichten Handhabung weisen die einzelnen Aufnahmen, die lediglich einseitig in der Fassung drehgelagert sind, an ihrem anderen Ende bevorzugt einen Anschluß für einen Handgriff auf, mittels dem die Aufnahme in die Fassung eingesetzt bzw. aus dieser herausgenommen werden kann. Es kann die Aufnahme dahingehend gestaltet sein, dass diese von einer Gegenhalterung auf dem Gleitstück der Mittelstütze im Betrieb gehalten ist. Es kann damit eine einzige Gegenhalterung, welche scheibenförmig ausgebildet ist, als Gegenhalterung mehrerer Aufnahmen dienen. Es kann diese Gegenhalterung auf dem Gleitstück feststellbar sein oder es kann die Gegenhalterung mittels einer Feder gegen eine mittelstützenfeste Schulter abgestützt sein. Diese Schulter kann Teil einer Kappe sein, welche auf die Spitze der Mittelstütze aufgesetzt und dort z.B. durch einen Bajonettverschluss verriegelt ist. Die andere Seite der Kappe ist bevorzugt als Aufnahme für das Handwerkszeug ausgebildet. Bevorzugt in gleicher Weise ist eine Gegenhalterung für Grillgut vorgesehen, das von der Mittelstütze selbst gehalten ist. Eine solche Gegenhalterung ist derart gestaltet, dass von einem auf dem Gleitstück der Mittelstütze geführten Gleitteil federnde Beine abgespreizt sind zur Anlage an und Festhaltung des Grillgutes.

Die Erfindung wird anhand in der Zeichnung dargestellte Ausführungsbeispiele näher erläutert. In der Zeichnung zeigt:
- Fig. 1: eine Frontansicht eines ersten Aasführungsbeispieles eines in einem Gehäuse angeordneten Grillplatzes,
- Fig. 2: einen Schnitt gemäß Linie II-II in Figur 1,
- Fig. 3: eine Frontansicht eines zweiten Ausführungsbeispiels eines in einem Gehäuse angeordneten Grillplatzes,
- Fig. 4: einen Schnitt gemäß Linie IV-IV in Figur 3,
- Fig. 5: eine Grillhalterung nach der Erfindung,
- Fig. 6: einen Handgriff zur Handhabe der Grillhalterung nach Figur 3,
- Fig. 7: die Grillhalterung im Längsschnitt,
- Fig. 8: eine Draufsicht auf die Grillhalterung gemäß Pfeil VIII in Figur 5, und die
- Fig. 9 bis 11: eine Gegenhalterung zum Festspannen des Grillgutes in ihren Einzelteilen.

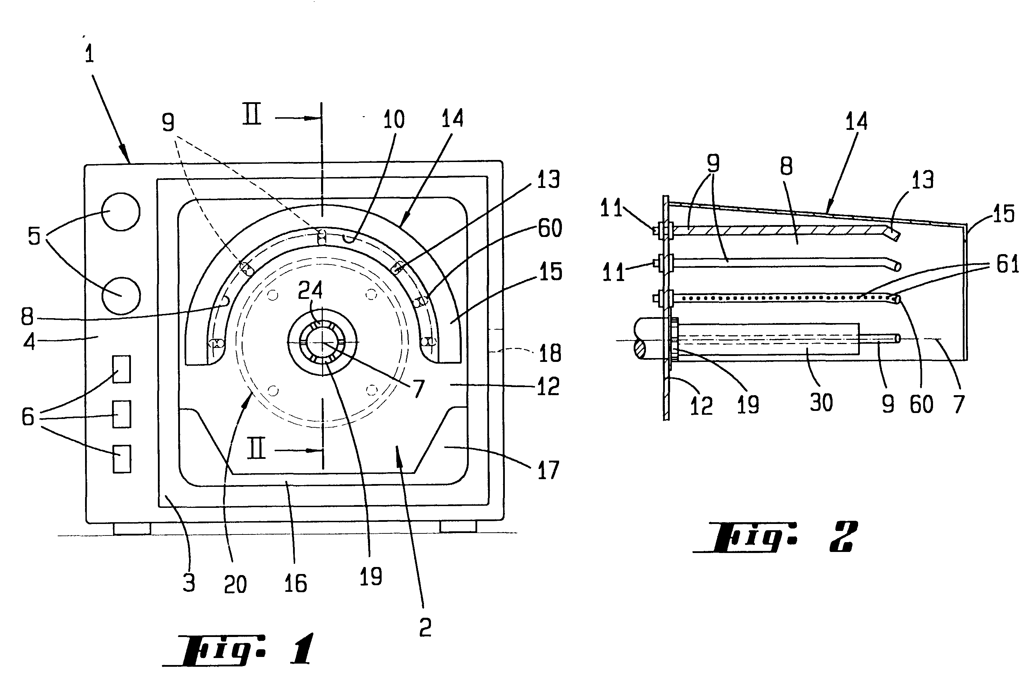

Figur 1 zeigt in einer Frontansicht ein allseitig geschlossenes Gehäuse 1, welches backofenähnlich einen Grillplatz 2 aufnimmt. Der Grillplatz 2 ist durch eine Fronttür 3 zugänglich. Daneben weist das Gehäuse 1 eine Schalttafel 4 mit Bedien- 5 und Anzeigeelementen 6 für den Grillplatz 2 auf.

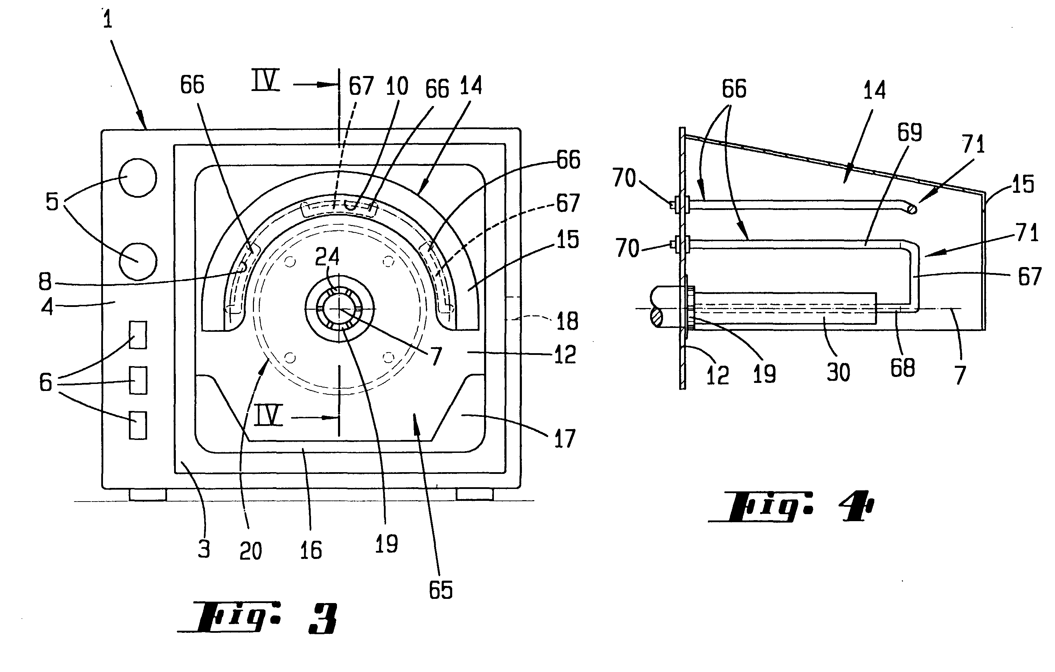

Der Grillplatz 2 mit einer waagerechten Grillachse 7, um die eine - in Figur 1 lediglich angedeutete - Grillhalterung 20, bevorzugt nach Figur 3, für die Aufnahme eines Grillgutes 29 drehbar ist, weist eine über dieser Grillachse 7 liegende Heizfläche 8 auf, die koaxial zur Grillachse 7 ausgebildet und angeordnet ist. Die Heizfläche 8 setzt sich aus einzelnen, bevorzugt induktiv aufheizbaren Heizelementen 9 zusammen, die als Stab-Heizelemente ausgebildet sind und die jeweils individuell in ihrer Heizleistung mittels der Bedienelemente 5 steuerbar sind. Dazu wird als Ist-Wertgeber für die Temperatur ein nicht weiter dargestellter Thermofühler jeweils vorgesehen. Die vorgesehenen fünf Heizstäbe 9 erstrecken sich parallel zur Grillachse 7 und liegen auf einer Mantelfläche 10 koaxial zur Grillachse 7, wobei die so gebildete Heizfläche 8 gemäß der Ansicht in Figur 1 einen Kreisbogen mit einem Öffnungswinkel von 180° überstreicht.

Die Stab-Heizelemente 9 sind jeweils an einem ersten Ende 11 in einer Rückwand 12 des Grillplatzes 2 gehalten. Die jeweils freien, zweiten Enden 13 der Heizstäbe 9 sind auf die Grillachse 7 zu abgewinkelt, vergleiche auch Figur 2.

Über der Heizfläche 8 ist ein Reflektor 14 angeordnet, der leicht konisch ausgebildet ist und der im Bereich seines größten Durchmessers ebenfalls an der Rückwand 12 des Grillplatzes 2 befestigt ist. Vor den freien Enden 13 der Heizelemente 9 weist der Reflektor eine nach vorn abgewinkelte Schutzblende 15 auf, so dass die Heizfläche 10 lediglich auf das Grillgut ausstrahlen kann und es liegen so die Heizelemente 9 vor z. B. Handberührungen geschützt.

Unterhalb der Grillachse 7 ist eine Fettpfanne 16 gezeigt, deren Seitenwände 17 bis etwa auf die Höhe des Reflektors 14 reichen. Diese Fettpfanne 16 steht auf einem Boden des Gehäuses 1 oder alternativ auf einem dort vorgesehenem Rost für konventionelles Grillen.

Eine verschließbare Durchgangsöffnung 18 stellt eine Luftzirkulation für den Grillplatz 2 sicher. Ferner ist solch ein geschlossener Grillplatz 2 auch bestens für eine Evakuierung geeignet und damit für ein Garen bei Niederdruck.

Insbesondere der Figur 2 ist ferner zu entnehmen, dass dem Grillplatz 2 eine Düse 60 mit Düsenöffnungen 61 zugeordnet ist. Es ist diese Düse 60 - hier nicht dargestellt - mit einem oder mehreren Gewürzbehältern verbunden. Ist dieser Gewürzbehälter z.B. mit Druckluft beaufschlagbar, so kann mit aus den Düsenöffnungen austretendem Gewürz ein Grillgut auf der Grillhalterung 20 besprüht werden. Gerade bei einem geschlossenen Grillplatz nach Figuren 1 und 2 reicht es aber auch zumeist aus, die Atmosphäre des Grillraums 2 hinreichend mit Gewürzen zu sättigen, um das Grillgut wohlschmeckend zu garen. Es kann allerdings auch diese Düse mit der Fettpfanne 16 in Verbindung stehen, so dass dort Gewürze z.B. auf flüssiger Basis aufgesprüht werden können.

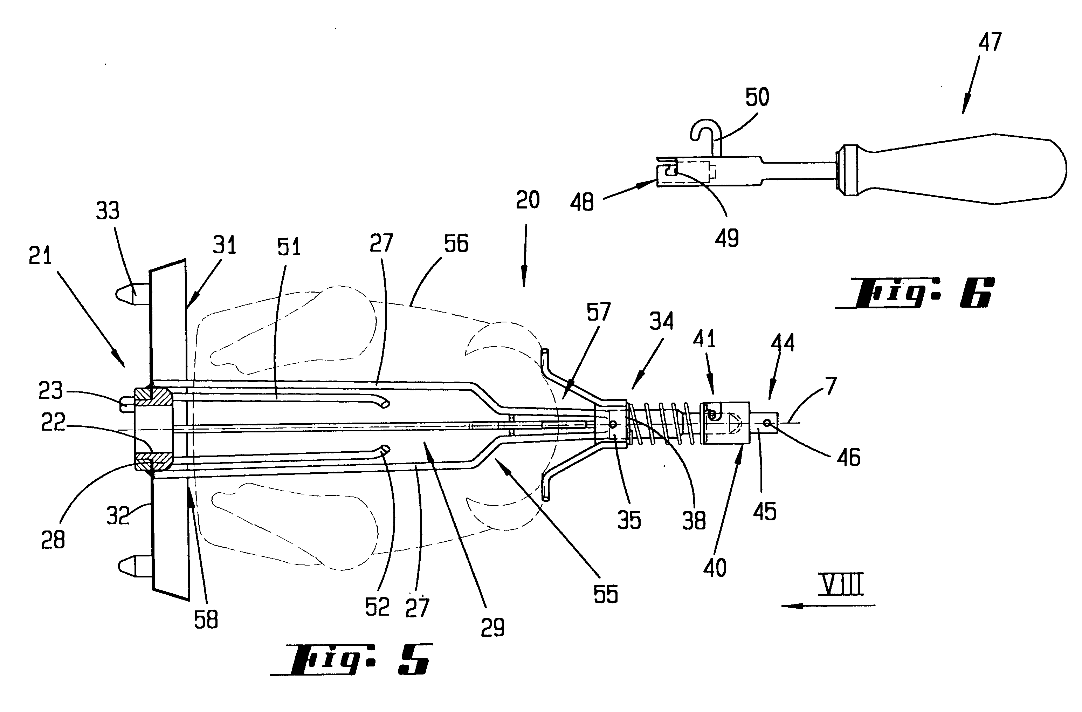

Der Grillplatz 65 nach den Figuren 3 und 4 stimmt weitestgehend mit dem Grillplatz 2 überein und es sind dementsprechend weitgehend Positionsziffern übernommen. Der wesentliche Unterschied besteht in der Ausbildung der Heizelemente 66. Diese sind im wesentlichen U-förmig mit zwei von einem Querstück 67 abragenden Schenkeln 68,69. Die freien Schenkelenden 70 sind in der Rückwand 12 gehalten. Die freien Endbereiche 71 mit dem Querstück 67 sind auf die Grillachse 7 zu abgewinkelt. Wie gezeigt, bilden drei U-förmige Halselemente 66 hier die Heizfläche 8.

Die Rückwände 12 weisen jeweils etwa mittig einen Adapter 19 für eine einseitige Aufnahme einer Grillhalterung 20 nach Figur 5 auf der Grillachse 7 auf. Eine solche Aufnahme kann form- und kraftschlüssig ausgebildet sein. Entscheidend ist, dass die Rotationsbewegung des von einem Motor angetriebenen Adapters 19 auch auf die Grillhalterung 20 nach Figur 3 übertragen wird. Im wesentlichen ist die Grillhalterung 20 spießähnlich ausgebildet und ist ein Ende 21 zum Anschluß an dem Adapter 19 ausgebildet derart, dass die Grillhalterung 20 eine Bohrung 22 aufweist, mit der die Grillhalterung 20 auf den Adapter 19 aufschiebbar ist. Ein Ansatz 23, eingefügt in eine entsprechende Ausnehmung 24 des Adapters 19, garantiert bei einer rotierenden Bewegung die Mitnahme der Grillhalterung 20. Eine mehrkantige Ausbildung der Bohrung bzw. des Adapters kann ebenfalls vorgesehen sein.

Das freie Ende 25 der Grillhalterung 20 läuft in einer Spitze 26 aus, mit der es möglich ist, z. B. Geflügel zu durchstoßen, vergleiche Figur 7. Der Grillhalter 20 weist koaxial zur Grillachse 7 verlaufende Einzelstreben 27 auf, die adapterseitig ringförmig an einem Fuß 28 z. B. durch Anschweißen gehalten sind. Zum freien Ende 25 hin verlaufen diese Einzelstreben nahezu parallel bzw. koaxial zur Grillachse 7, wodurch adapterseitig ein Innenraum 29 ausgebildet wird, der auch bei Gebrauch grillgutfrei gehalten ist, vergleiche Figur 5. Zum freien Ende 25 der Grillhalterung 20 hin, sind die Einzelstreben 27 zu der Spitze 26 zusammengefaßt, mit der das Grillgut 56, z. B. ein Geflügel, durchbohrt werden kann. Bei dem Übergang von dem grillgutfrei gehaltenen Innenraum 29 zur Spitze 26 hin bilden die Einzelstreben 27 eine Schulter 55 aus, mit der das Grillgut 56 innenseitig gehalten ist. Die Ausbildung des grillgutfreien Innenraums 29 erlaubt es, auf der Grillachse 7 einen weiteren Heizstab 30 anzuordnen, welcher mit dem Adapter 19 mitrotieren kann oder aber auch feststehend ausführbar ist.

Am Fuß 28 sind ferner frei endende Stäbe 51 z. B. angeschweißt, welche an ihrem freien Ende Abwinklungen 52 aufweisen. Es dienen diese Stäbe 51 zum Schutz des mittleren Heizstabes 30 vor z. B. Fettlappen des Grillgutes 56.

Die Grillhalterung 20 weist adapterseitig ferner einen grillhalterfest ausgebildeten Anschlag 31 in Form eines Tellers auf, an der das Grillgut 56 beim Aufschieben auf den Grillhalter 20 über die Spitze 26 spätestens in Anlage kommt. Auf der dem Grillgut abgewandten Seite 32 des Tellers 31 sind Füße 33 angeordnet, so dass die Grillhalterung senkrecht auf den Füßen 33 stehend mit dem Grillgut 56 versehen werden kann.

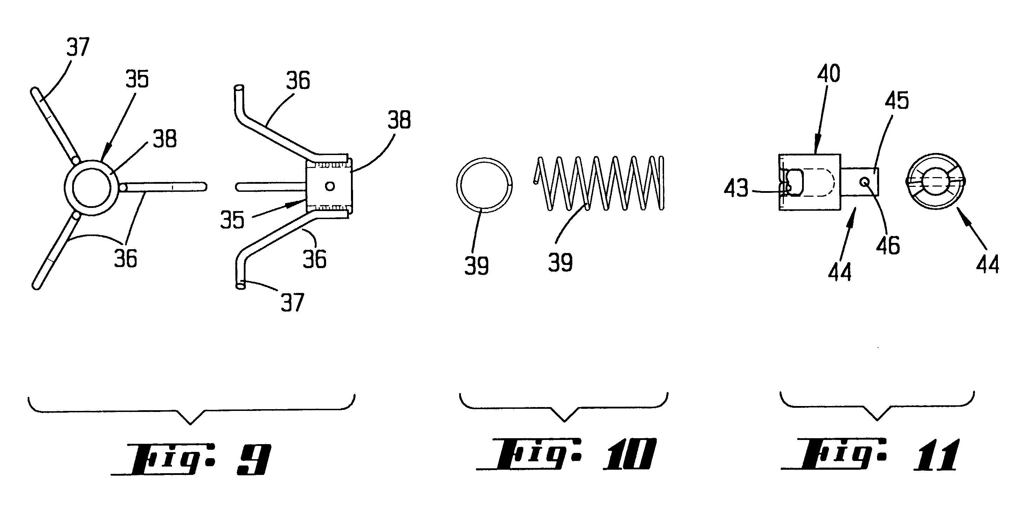

Auf der Grillhalterung 20 ist das Grillgut 56 zwischen der Schulter 55 und einer Gegenhalterung 34 eingespannt, deren Einzelteile in den Figuren 9 bis 11 nochmals dargestellt sind. Eine derartige Einspannung hat den Vorteil, dass beiderends des Grillgutes 56 freie Bereiche 57,58 von den Einzelstreben 27 und den Stäben 51 gebildet werden, durch die Luft durch das Grillgut 56 hindurch zirkulieren kann.

Die Gegenhalterung 34 umfasst ein auf dem freien Ende 25 der Grillhalterung 20 verschieblich geführtes Gleitstück 35, von welchem Beine 36 abgespreizt sind zur Anlage und Festhaltung des Grillgutes 56. Die Anzahl und Ausführung der Beine 36 ist nahezu beliebig; es können auch an dem Gleitstück 35 feststehende Dorne bspw. vorgesehen sein. Die hier vorgesehene Ausführung mit Beinen 36 mit endseitigen Abwinklungen 37 hat jedoch den Vorteil, dass das Grillgut 56 ohne Beschädigung durch Aufweiten der Beine 36 federnd gehalten ist, wodurch eine Veränderung des Grillgutes 29 durch den Garprozeß keinerlei Auswirkungen auf das Festhalten hat. Dieses federnde Halten wird noch dadurch unterstützt, dass zwischen einer Ringschulter 38 des Gleitstücks 35 und einem grillhalterungsfesten Gegenlager eine Druckfeder 39 nach Figur 10 gespannt ist. Gemäß dem gezeigten Ausführungsbeispiel ist dieses Gegenlager als Kappe 40 nach Figur 11 ausgebildet. Die Kappe 40 überdeckt die Spitze 26 der Grillhalterung 20 und ist auf dieser mittels eines Bajonettverschlusses 41 sicher gehalten, wozu die Grillhalterung 20 einen oder mehrere Zapfen 42 und die Kappe 40 entsprechende Ausnehmungen 43 zum Aufsetzen und Verriegeln aufweist.

Die Gegenhalterung in einer einstückigen Ausführung ist alternativ möglich, bei der z. B. auf einem an der Grillhalterung festlegbaren Träger Haltedorne, Haltebeine usw. selbstfedernd und/oder gegen die Kraft einer Feder in oben beschriebener Art axial verschiebbar angeordnet sind.

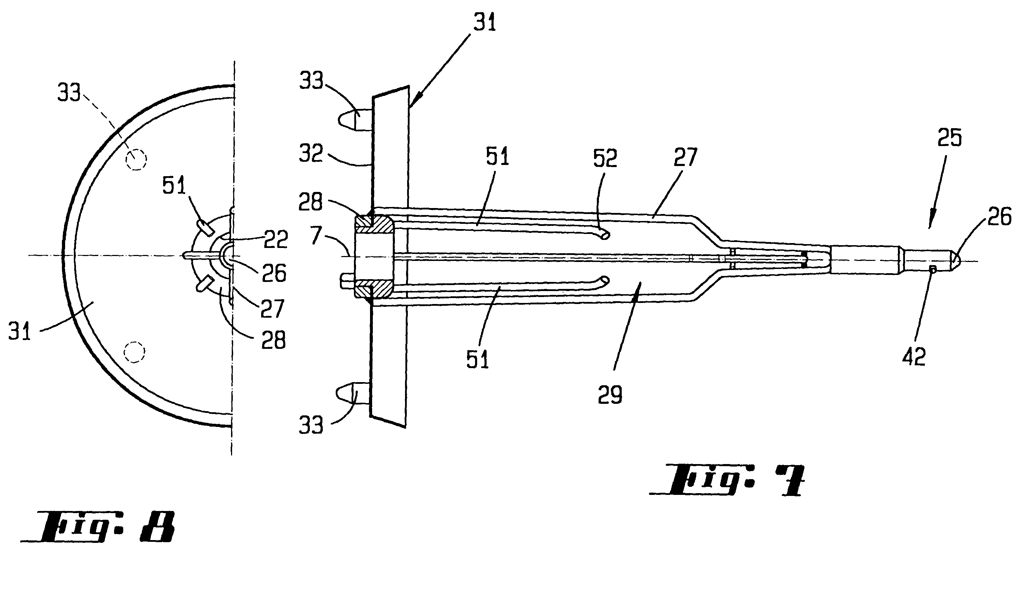

Die Kappe 41 weist ferner einen Anschluß 44 in Form eines Ansatzes 45 von rechteckigem Querschnitt und sich längs der Grillachse 7 erstreckend auf, der quer dazu Riegel 46 trägt. Ein Handgriff 47 nach Figur 6 weist eine diesem Anschluss 44 entsprechende Aufnahme 48 auf, in der die Grillhalterung durch die im Querschnitt rechteckförmige Ausbildung des Ansatzes 45 drehfest und durch Verriegeln der Riegel 46 in Aussparungen 49 in axialer Richtung festliegend gehalten ist. Zur weiteren vereinfachenden Handhabung ist noch am Handgriff 47 ein Haken 50 vorgesehen, der zur Aufnahme 48 hin um 180° abgebogen und zu dieser Seite hin offen ist, z.B. zur Aufnahme heißer Teile.

## Patentansprüche

1. Grillgerät mit einer um eine waagerechte Grillachse drehbaren Grillhalterung für die Aufnahme eines Grillgutes, insbesondere von Geflügel, einem Reflektor und einer über der Grillachse liegenden Heizfläche, wobei die Heizfläche (8) koaxial zur Grillachse (7) angeordnet ist, **dadurch gekennzeichnet, dass** der Reflektor über der Heizfläche und koaxial zur Grillachse angeordnet ist, konisch ausgebildet ist und mit seinem kleineren Durchmesser zu den freien Enden (13) der Heizelemente (9) hin, deren andere Enden an einer Rückwand des Grillgerätes gehalten werden, bzw. den freien Endbereichen in Form von Querstücken von U-förmig ausgebildeten Heizelementen hin, deren Schenkelenden gehalten sind, orientiert ist, während er im Bereich seines größten Durchmessers an der Rückwand des Grillgerätes befestigt ist.

2. Grillgerät nach Anspruch 1, **dadurch gekennzeichnet, dass** die Heizfläche Stab-Heizelemente aufweist und dass jedes Stab-Heizelement (9) an einem ersten Ende (11) gehalten ist und dass ein zweites freies Ende (13) auf die Grillachse (7) zu abgewinkelt ist.

3. Grillgerät nach einem der Ansprüche 1 oder 2, **dadurch gekennzeichnet, dass** die Rückwand Teil eines allseitig geschlossenen Gehäuses zur Aufnahme eines Grillplatzes ist, welcher durch eine Fronttür zugänglich ist.

4. Grillgerät nach Anspruch 3, **dadurch gekennzeichnet, dass** der Grillplatz auf Niederdruck evakuierbar ist.

5. Grillgerät nach einem oder mehreren der vorhergehenden Ansprüche, **gekennzeichnet durch** eine mehrere Grillplätze (76) tragende vertikale Tragwand (75).

6. Grillgerät nach einem oder mehreren der vorhergehenden Ansprüche, **dadurch gekennzeichnet, dass** der Garzustand des Grillgutes (29) eines jeden Grillplatzes (2) mittels einer Anzeige (6) dargestellt ist.

7. Grillgerät nach einem oder mehreren der vorhergehenden Ansprüche, **dadurch gekennzeichnet**, dassjeweils mit einem Grillplatz (76) eine Waage (80) verbunden ist zur Messung des Gewichts des Grillgutes, dass ein Rechner nach Eingabe der Art des Grillgutes aus dem Gewicht die Garzeit berechnet und den Grillvorgang automatisch steuert.

8. Grillgerät nach einem der vorhergehenden Ansprüche, **dadurch gekennzeichnet, dass** dem Grillplatz (2) eine Düse (60) zugeordnet ist, dass die Düse (60) an einen oder mehrere Gewürzbehälter (77) angeschlossen ist und dass mittels der Düse (60) das Grillgut mit Gewürz besprühbar und/oder die Atmosphäre des Grillraums (2) mit Gewürzen anreicherbar ist.

## Claims

1. Grill with a grill mounting, rotatable around a horizontal grill axis and serving to hold an item to be grilled, in particular poultry, a reflector and a heating surface located above the grill axis, wherein the heating surface (8) is arranged coaxially to the grill axis (7), **characterised in that** the reflector is located over the heating surface and is coaxial to the grill axis, is conical in shape and is aligned with its smaller diameter towards the free ends (13) of the heating elements (9), the other ends of which are held on a rear wall of the grill, or towards the free end areas in the form of cross-pieces of U-shaped heating elements, the limb ends of which are supported, while in the area of its greatest diameter it is fastened to the rear wall of the grill.

2. Grill according to claim 1, **characterised in that** the heating surface has bar heating elements and that each bar heating element (9) is held at a first end (11) and that a second free end (13) is bent on to the grill axis (7).

3. Grill according to any of claims 1 or 2, **characterised in that** the rear wall is part of an all-round enclosed housing to accommodate a grilling area, which is accessible through a front door.

4. Grill according to claim 3, **characterised in that** the grilling area may be evacuated to give low pressure.

5. Grill according to one or more of the preceding claims, **characterised by** a vertical support wall (75) holding several grilling areas (76).

6. Grill according to one or more of the preceding claims, **characterised in that** the state of cooking of the item to be grilled (29) in each grilling area (2) is shown on a display (6).

7. Grill according to one or more of the preceding claims, **characterised in that** each grilling area (76) is linked to a weighing device (80) for recording the weight of the item to be grilled, that a computer, after input of the nature of the item to be grilled, calculates the cooking time from its weight and automatically controls the grilling process.

8. Grill according to any of the preceding claims, **characterised in that** the grilling area (2) is assigned a nozzle (60), that the nozzle (60) is connected to one or more spice containers (77) and that, by means of the nozzle (60), the item to be grilled may be sprayed with spice and/or the atmosphere of the grilling area (2) may be enriched with spices.

## Revendications

1. Grilloir avec une fixation de grilloir rotative autour d'un axe de grilloir horizontal pour la pose d'un produit à griller, en particulier une volaille, un réflecteur et une surface chauffante disposée au-dessus de l'axe de grilloir, moyennant quoi la surface chauffante (8) est installée dans le sens coaxial par rapport à l'axe de grilloir (7), **caractérisé en ce que** le réflecteur est disposé au-dessus de la surface chauffante et dans le sens coaxial par rapport à l'axe de grilloir, **en ce qu'**il est de forma conique et **en ce qu'**il est orienté, avec son plus petit diamètre, vers les extrémités libres (13) des éléments chauffants (9) dont les autres extrémités sont maintenues dans un panneau arrière du grilloir, ou vers les zones d'extrémité libres en forme de pièces transversales d'éléments chauffants en forma de U dont les extrémités des branches sont tenues, tout en étant fixé dans la zone de son plus grand diamètre au panneau arrière du grilloir.

2. Grilloir selon la revendication 1, **caractérisé en ce que** la surface chauffante comporte des éléments chauffants en barres et **en ce que** chaque élément chauffant en barre (9) est maintenu à une première extrémité (11) et **en ce qu'**une deuxième extrémité libre (13) est pliée vers l'axe de grilloir (7).

3. Grilloir selon l'une des revendications 1 ou 2, **caractérisé en ce que** le panneau arrière fait partie d'un boîtier fermé de tous les côtés pour la réception d'un emplacement de grillage qui est accessible par une porte frontale.

4. Grilloir selon la revendication 3, **caractérisé en ce que** l'air peut être évacué de l'emplacement de grillage à basse pression.

5. Grilloir selon l'une ou plusieurs des revendications précédentes, **caractérisé par** un panneau porteur (75) vertical portent plusieurs emplacements de grillage (76).

6. Grilloir selon l'une ou plusieurs des revendications précédentes, **caractérisé en ce que** l'état de cuisson du produit à griller (29) de chaque emplacement de grillage (2) est indiqué par un témoin d'affichage (6).

7. Grilloir selon l'une ou plusieurs des revendications précédentes, **caractérisé en ce qu'**une balance (80) est reliée respectivement à un emplacement de grillage (76) pour mesurer le poids du produit à griller, **en ce qu'**un calculateur, après l'entrée du type de produit à griller, calcule le temps de cuisson à partir du poids et commande automatiquement le processus de grillage.

8. Grilloir selon l'une ou plusieurs des revendications précédentes, **caractérisé en ce qu'**une buse (60) est affectée à l'emplacement de grillage (2), **en ce que** la buse (60) est reliée à un ou à plusieurs récipients d'herbes aromatiques (77) et **en ce que** le produit à griller peut être pulvérisé avec des herbes aromatiques au moyen de la buse (60) et/ou l'atmosphère de l'emplacement de grillage (2) peut être enrichie en herbes aromatiques.
